(19) **Europäisches Patentamt**
**European Patent Office**
**Office européen des brevets**

(11) **EP 1 512 490 B1**

(12) **EUROPÄISCHE PATENTSCHRIFT**

(45) Veröffentlichungstag und Bekanntmachung des Hinweises auf die Patenterteilung:
**05.09.2007   Patentblatt 2007/36**

(51) Int Cl.:
**B23P 6/00** *(2006.01)*      **F01D 5/00** *(2006.01)*

(21) Anmeldenummer: **04018923.5**

(22) Anmeldetag: **10.08.2004**

(54) **Reparaturverfahren für eine Schaufel einer Strömungsarbeitsmaschine**

Repairing method for a blade of a turbomachine

Procédé de réparation d'une aube de turbomachine

(84) Benannte Vertragsstaaten:
**DE FR GB**

(30) Priorität: **04.09.2003   DE 10340827**

(43) Veröffentlichungstag der Anmeldung:
**09.03.2005   Patentblatt 2005/10**

(73) Patentinhaber: **Rolls-Royce Deutschland Ltd & Co KG**
**15827 Dahlewitz (DE)**

(72) Erfinder: **Gümmer, Volker**
**15831 Mahlow (DE)**

(74) Vertreter: **Hoefer, Theodor**
**Patentanwälte**
**Gabriel-Max-Strasse 29**
**81545 München (DE)**

(56) Entgegenhaltungen:
DE-A1- 19 831 736          DE-C1- 19 712 868
US-A- 3 704 500            US-A- 5 281 062

**Beschreibung**

Die Erfindung bezieht sich auf ein Reparaturverfahren für eine Schaufel einer Strömungsarbeitsmaschine gemäß den Merkmalen des Oberbegriffs des Hauptanspruchs.

Ein solches Reparaturverfahren ist aus US-A-5,281,062 bekannt.

Im Einzelnen bezieht sich die Erfindung auf ein Reparaturverfahren, bei welchem zumindest ein Teilbereich einer Vorderkante der Schaufel entfernt wird.

Strömungsarbeitsmaschinen im Sinne der Erfindung sind beispielsweise Bläser, Verdichter, Pumpen und Ventilatoren, die in axialer, halbaxialer und radialer Bauart mit gasförmigem oder flüssigem Arbeitsmedium betrieben werden können.

Die Strömungsarbeitsmaschine kann eine oder mehrere Stufen mit jeweils einem Rotor und einem Stator umfassen, in Einzelfällen kann die Stufe auch lediglich durch einen Rotor gebildet werden. Der Rotor umfasst eine Anzahl von Schaufeln, die mit der rotierenden Welle der Strömungsarbeitsmaschine verbunden sind und Energie an das Arbeitsmedium abgeben.

Der Rotor kann mit oder ohne Deckband am äußeren Schaufelende ausgeführt sein.

Der Stator kann aus einer Anzahl feststehender Schaufeln, die nabenseitig wie gehäuseseitig mit festem oder freiem Schaufelende ausgeführt sein können, bestehen.

Die Rotortrommel und die Beschaufelung sind üblicherweise von einem Gehäuse umgeben, es kann jedoch auch auf ein Gehäuse verzichtet werden, beispielsweise bei Propellern oder Schiffsschrauben.

Die Strömungsarbeitsmaschine kann auch einen Stator vor dem ersten Rotor, ein so genanntes Vorleitrad, aufweisen. Mindestens ein Stator oder ein Vorleitrad können abweichend von der unbeweglichen Fixierung auch drehbar gelagert sein, um den Anstellwinkel zu verändern. Eine derartige Verstellung kann beispielsweise durch eine von außerhalb des Ringkanals zugängliche Spindel erfolgen. Alternativ kann die Strömungsarbeitsmaschine bei Mehrstufigkeit auch zwei gegenläufige Wellen besitzen, so dass die Rotorschaufelreihen von Stufe zu Stufe die Drehrichtung wechseln. Hierbei existieren dann keine Statoren zwischen aufeinanderfolgenden Rotoren.

Weiterhin kann die Strömungsarbeitsmaschine alternativ eine Nebenstufenkonfiguration aufweisen, bei welcher sich ein einstromiger Ringkanal hinter einer bestimmten Schaufelreihe in zwei konzentrische Ringkanäle aufteilt, die ihrerseits mindestens eine weitere Schaufelreihe umfassen.

Die Effizienz und Betriebsstabilität von Strömungsarbeitsmaschinen wie Bläsern, Verdichtern, Pumpen oder Ventilatoren, sind über ihre Betriebszeit einer erheblichen Verschlechterung unterworfen, die eine Modifikation oder Nacharbeit von Teilen der Strömungsarbeitsmaschine erforderlich macht, welche schon länger im Einsatz sind.

Ein weiterer Aspekt besteht darin, dass die ursprünglich erwartete Lebensdauer von Schaufeln und Scheiben nicht erreicht werden kann, da ein Bauteilverschleiß zu einer zunehmenden Schwingungsbelastung führt.

So ist es in ungünstigen Fällen möglich, dass der im ursprünglichen Entwurf der Beschaufelung vorgesehene Abstand zur Stabilitätsgrenze der Strömungsarbeitsmaschine teilweise oder vollständig verloren geht oder Schaufeln und/oder Scheiben eine zu geringe tatsächliche Lebensdauer haben. Der Grund hierfür liegt beispielsweise in einer Vergrößerung der radialen Laufspalte, insbesondere an den Schaufelspitzen von Rotoren und der damit verbundenen Intensivierung der nachteiligen Durchströmung der Radialspalte von der Druck- zur Saugseite einer jeden Schaufel.

Eine nachträgliche Verbesserung des Strömungsfeldes ist grundsätzlich entweder durch spezifische Maßnahmen am Gehäuse oder an der Beschaufelung möglich. Eine Möglichkeit besteht in einer besonderen Strukturierung des Gehäuses im Laufbereich der Schaufeln durch so genannte "casing treatments".

Um Beschädigungen der Schaufeln zu reparieren, ist es aus dem Stand der Technik bekannt, die beschädigten Bereiche auszuschleifen, insbesondere, um Kerbwirkungen zu vermeiden. Derartige übliche Maßnahmen führen vielfach zu signifikanten Verschlechterungen der Leistung der Strömungsarbeitsmaschine. Weiterhin müssen die Schaufeln, die durch derartige Verfahren reparierbar sein sollen, erheblich überdimensioniert werden, um ausreichende Materialreserven zu bieten. Ein Reparaturverfahren ist beispielsweise aus der DE 197 12 868 C1 bekannt.

Der Erfindung liegt die Aufgabe zugrunde, ein Reparaturverfahren der eingangs genannten Art zu schaffen, welches bei einfachem Aufbau und einfacher, kostengünstiger Durchführbarkeit bei hoher Sicherheit ein hohes Maß an Effizienz der Strömungsarbeitsmaschine bietet.

Erfindungsgemäß wird die Aufgabe durch die Merkmalskombination des Hauptanspruchs gelöst, der Unteranspruch zeigt weitere vorteilhafte Ausgestaltungen der Erfindung.

Erfindungsgemäß ist somit vorgesehen, dass ein Vorderkantenrückschnitt an mindestens einer der bestehenden Schaufeln der Strömungsarbeitsmaschine erfolgt, durch welchen sich die Betriebsleistungen und/oder die Lebensdauer der Strömungsarbeitsmaschine verbessern.

Das erfindungsgemäß vorgeschlagene Reparaturverfahren erlaubt durch die spezielle Ausgestaltung des Vorderkantenrückschnitts eine Vergleichmäßigung und Beruhigung der Strömung im Schaufelrandbereich. Auf diese Weise kann insbesondere bei Rotoren in kritischen Fällen eine von dieser Strömung ausgehende Schwingungsanregung und die damit verbundene Lebensdauereinbuße vermieden werden.

Insbesondere die im Fußbereich von Fanschaufeln auftretenden vibratorischen Verschleißerscheinungen, die durch Strömungsinstabilitäten im Blattspitzenbereich der Schaufeln hervorgerufen werden, werden durch die Anwendung des erfindungsgemäßen Reparaturverfahrens reduziert. Dies führt zu einer Erhöhung der Schaufel- und Scheibenlebensdauer.

Die vorliegende Erfindung erlaubt zudem eine Steigerung der Betriebsleistungen von Strömungsarbeitsmaschinen. Erfindungsgemäß ist eine Erhöhung des Stufenwirkungsgrades von rund 0,5% möglich. Bei Einsatz der Erfindung am Fan eines Flugtriebwerks mit beispielsweise 25.000 Pfund Schub ergibt sich eine Reduzierung des spezifischen Kraftstoffverbrauchs von bis zu 0,5%. Ein möglicher Zugewinn an Stabilität, d.h. eine Erhöhung der Abreißgrenze der Strömungsarbeitsmaschine, ist mit rund 5% anzugeben.

Im Folgenden wird die Erfindung anhand von Ausführungsbeispielen in Verbindung mit den Zeichnungen beschrieben.

Dabei zeigt:

Fig. 1    ein erstes Ausführungsbeispiel einer Schaufelprofilkürzung durch einen erfindungsgemäßen Rückschnitt,

Fig. 2    ein weiteres Ausführungsbeispiel einer erfindungsgemäßen Schaufelprofilkürzung,

Fig. 3    ein Diagramm zur Verdeutlichung der im Rahmen der Erfindung möglichen Schaufelprofilkürzungen,

Fig. 4    eine Erläuterung der gewählten Dimensionierungen, und

Fig. 5    eine schematische Darstellung der Formgebung der Vorderkante durch einen erfindungsgemäßen Rückschnitt in der Schnittansicht längs der Meridianstromlinie einer Schaufel.

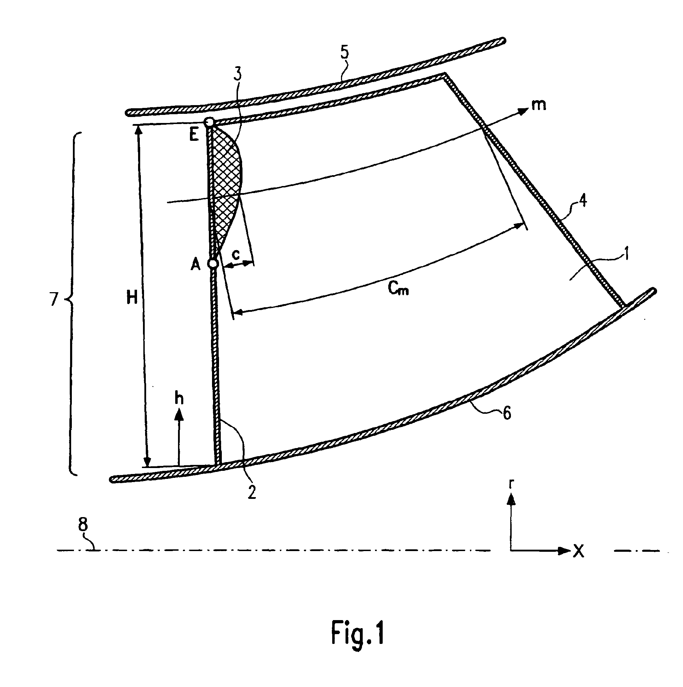

Die Fig. 1 zeigt zunächst eine Maschinenachse 8, um welche sich eine schematisch dargestellte Nabe 6 dreht. Zwischen der Nabe 6 und einem Gehäuse 5 ist ein Ringkanal 7 ausgebildet, durch welchen die Strömung erfolgt.

Bei dem in Fig. 1 gezeigten Ausführungsbeispiel ist eine Rotor-Schaufel 1 mit einer Vorderkante 2 und einer Hinterkante 4 dargestellt.

Der erfindungsgemäß vorzunehmende Rückschnitt ist mit dem Bezugszeichen 3 gekennzeichnet.

Die in Fig. 1 gezeichnete Schaufel kann auch in Form einer Statorschaufel ausgebildet sein.

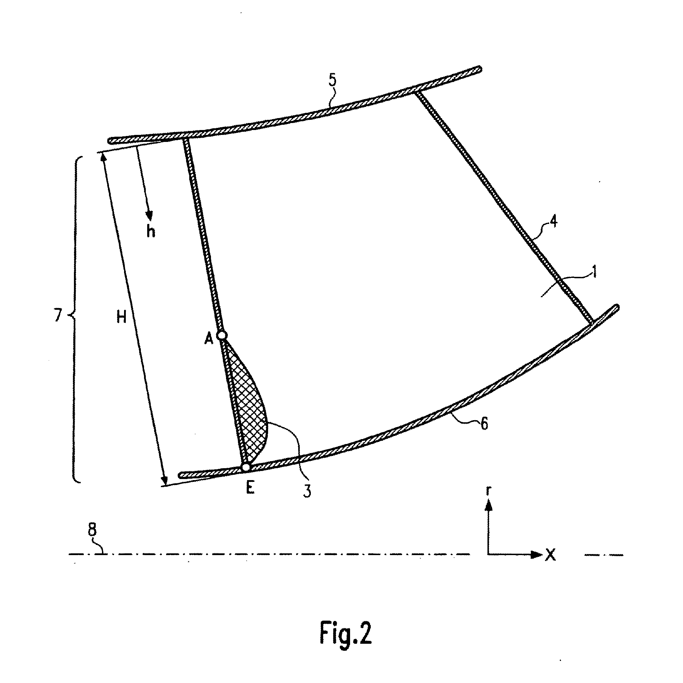

Die Fig. 2 zeigt ein weiteres Ausführungsbeispiel, bei welchem die Schaufel 1 ebenfalls als Rotorschaufel oder Statorschaufel ausgebildet ist. Gleiche Teile sind mit gleichen Bezugszeichen wie in Fig. 1 versehen.

Aus den Fig. 1 und 2 ist ersichtlich, dass erfindungsgemäß die Verkürzung einer Sehnenlänge der Schaufel 1 ausschließlich von der Vorderkante 2 aus erfolgt. Die beitragsmäßig größten Rückschnitte 3 sind dabei in den Regionen an den Schaufelenden vorgesehen. Erfindungsgemäß kann sowohl in der Nähe der Nabe 6 als auch in der Nähe des Gehäuses 5 je ein Rückschnitt an einer Schaufel 1 vorgesehen sein.

Jeder Rückschnitt 3 ist erfindungsgemäß so beschaffen, dass die Sehnenlänge der Schaufel 1 entlang der Gesamtheit oder in Teilen der Schaufelhöhe H zwischen an der Vorderseite vorgesehenen Punkten A (Anfangspunkt) und E (Endpunkt) verkürzt ist.

Erfindungsgemäß dient zur Definition der Lage der Punkte A und E die Schaufelhöhenkoordinate h, welche eine relative Schaufelhöhe definiert. Die Schaufelhöhenkoordinate h hat ihren Ursprung an dem näher am Anfangspunkt A gelegenen Ende der Schaufel 1. Der Anfangspunkt A befindet sich bei einer relativen Schaufelhöhe von h/H in einem Bereich von:

$$0 \le (h/H)_{\text{Punkt A}} < 0,85$$

Der Endpunkt E befindet sich bei einer relativen Schaufelhöhe von h/H in einem Bereich von:

$$0,95 < (h/H)_{\text{Punkt E}} \le 1,0$$

In Fig. 1 ist mit c die relative Rückschnittlänge in Meridianströmungsrichtung dargestellt, während $C_m$ die meridionale Sehnenlänge bezeichnet. Mit m ist der Meridian-Stromlinienverlauf angegeben. Auf die Darstellung dieser Zusammenhänge wurde in Fig. 2 aus Gründen der Übersichtlichkeit verzichtet, sie gelten jedoch auch bei dem Ausführungsbeispiel der Fig. 2.

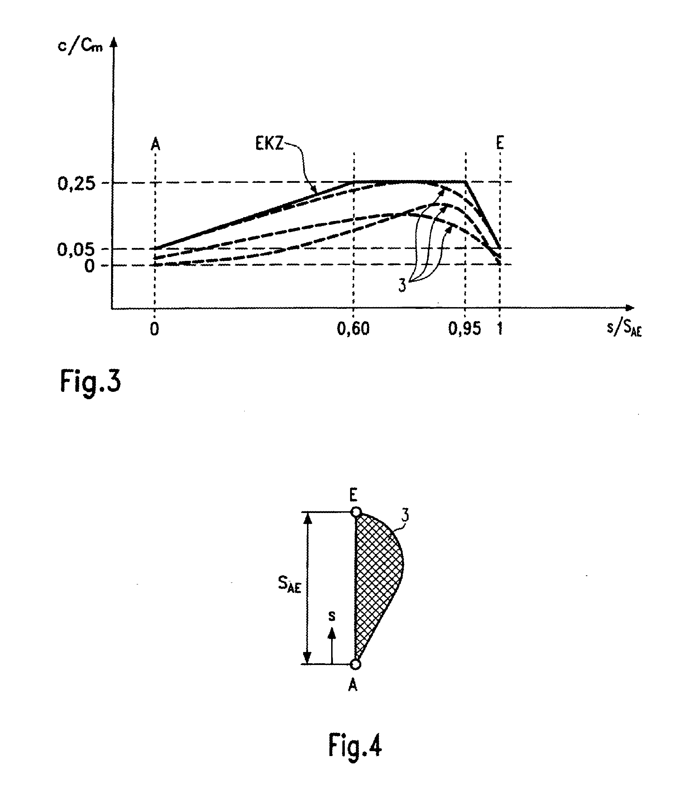

Die Fig. 4 zeigt die Definition der relativen Rückschnittposition s in radialer Richtung sowie der gesamten radialen Rückschnittlänge $S_{AE}$.

Aus Fig. 3 ist der Verlauf möglicher Vorderkantenrückschnitte 3 erläutert. Die Figur zeigt die Einhüllende der im Rahmen der vorliegenden Erfindung möglichen Rückschnitte 3. Die Darstellung bedient sich der relativen Rückschnittsposition $s/S_{AE}$ und der relativen Rückschnittlänge $c/C_m$. Erfindungsgemäß verläuft der Rückschnitt stets unterhalb eines einhüllenden Kurvenzuges EKZ. Am Anfangspunkt A beträgt die lokale Rückschnittlänge c maximal 5% der dortigen meridionalen Sehnenlänge $C_m$. Die Rückschnittlänge c nimmt bevorzugterweise vom Anfangspunkt A aus nur langsam zu und erreicht ihr Maximum im Bereich

$$0,6 < s/S_{AE} < 0,95.$$

In diesem Bereich kann die relative Rückschnittlänge bis zu $c/C_m = 0,25$ betragen. Bis zum Endpunkt E geht die relative Rückschnittlänge auf mindestens $c/C_m = 0,05$ zurück.

Die oben stehende Definition ermöglicht unterschiedlichste Realisierungen der Rückschnittgeometrien, die Fig. 3 zeigt beispielhaft drei Kurven von Rückschnitten 3.

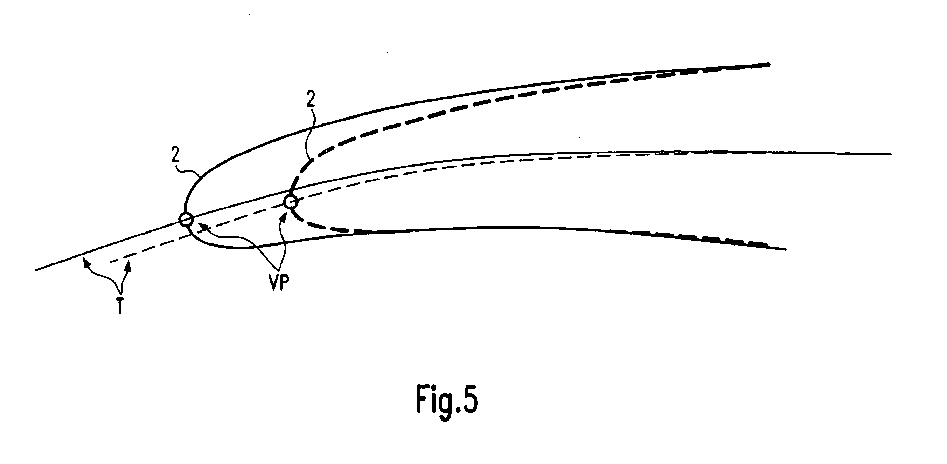

In Fig. 5 ist ein Meridianstromlinienschnitt einer Schaufel 1 in vereinfachter Darstellung gezeigt. Die durchgezogene Linie zeigt das Originalprofil der Schaufel 1, während die gestrichelte Linie das gekürzte Profil wiedergibt. Erfindungsgemäß ist es besonders günstig, wenn bei dem vorgesehenen Vorderkanten-Rückschnitt die Neugestaltung der Vorderkante 2 so ausgeführt wird, dass sie eine Form erhält, welche die Neigung der Tangente T an die Profilsehne am Vorderkantenaustrittspunkt VP aufrecht erhält.

**Bezugszeichenliste**

| | |
|---|---|
| 1 | Schaufel |
| 2 | Vorderkante |
| 3 | Rückschnitt |
| 4 | Hinterkante |
| 5 | Gehäuse |
| 6 | Nabe |
| 7 | Ringkanal |
| 8 | Maschinenachse |
| h | relative Schaufelhöhe |
| H | Schaufelhöhe |
| s | relative Rückschnittposition in radialer Richtung |
| c | relative Rückschnittlänge in Meridianströmungsrichtung |
| $C_m$ | meridionale Sehnenlänge |
| $S_{AE}$ | radiale Rückschnittlänge |
| m | Meridian-Stromlinienverlauf |
| T | Profilsehnentangente an der Vorderkante |
| A | Anfangspunkt |
| E | Endpunkt |
| VP | Vorderkantenaustrittspunkt |
| EKZ | einhüllender Kurvenzug |

**Patentansprüche**

1. Reparaturverfahren für eine Schaufel (1) einer Strömungsarbeitsmaschine, bei welchem zumindest ein Teilbereich einer Vorderkante (2) der Schaufel (1) entfernt wird,
**dadurch gekennzeichnet,**
**dass** ein Rückschnitt (3) der Schaufel (1) zwischen zwei Punkten (A) und (E) erfolgt, deren Lage auf dem ursprünglichen Profil der Vorderkante (2) der Schaufel (1) folgender Beziehung folgt:

- Punkt (A) ist der Anfangspunkt und liegt in einem Bereich der relativen Schaufelhöhe von (h/H) von

$$0 \le (h/H)_{\text{Punkt A}} < 0{,}85$$

- Punkt (E) ist der Endpunkt und liegt in einem Bereich der relativen Schaufelhöhe (h/H) von

$$0{,}95 < (h/H)_{\text{Punkt E}} \le 1{,}0$$

- wobei (h) die Schaufelhöhenkoordinate (h) ist, welche ihren Ursprung an dem näher am Anfangspunkt (A) gelegenen Ende der Schaufel hat und wobei (H) die Schaufelhöhe ist,
- **dass** der Verlauf des Rückschnitts durch das Verhältnis der relativen Rückschnittposition (s/S$_{AE}$) und der relativen Rückschnittlänge (c/C$_m$) definiert ist, wobei
- (c) die lokale Rückschnittlänge in Meridianströmungsrichtung ist,
- (C$_m$) die meridionale Sehnenlänge ist,
- (s) die lokale Rückschnittlänge in radialer Richtung ist, und
- (S$_{AE}$) die radiale Rückschnittlänge ist,
- wobei die lokale Rückschnittlänge (c) vom Punkt (A) aus langsam zunimmt und ihr Maximum im Bereich 0,60 < s/S$_{AE}$ < 0,95 erreicht, wobei dort die relative Rückschnittlänge bis zu c/C$_m$ = 0,25 beträgt, wobei die relative Rückschnittlänge (c/C$_m$) auf mindestens c/C$_m$ = 0,05 zurückgeht.

**2.** Verfahren nach Anspruch 1, **dadurch gekennzeichnet, dass** die Vorderkante in einer Form ausgebildet wird, bei welcher die Neigung einer Tangente (T) an die Profilsehne in einem Vorderkantenaustrittspunkt (VP) bei dem rückgeschnittenen Profil der Schaufel gleich ist zu der am Originalprofil.

**Claims**

**1.** Repair method for a blade (1) of a turbomachine, in which at least a partial area of a leading edge (2) of the blade (1) is removed,
**characterized in that**,
a cutback (3) on the blade (1) is made between two points (A) and (E) whose positions on the original profile of the leading edge (2) of the blade (1) follow the following relationship:

- point (A) is the starting point and lies within a range of the relative blade height of (h/H) of

$$0 \le (h/H)_{\text{point A}} < 0.85,$$

- point (E) is the end point and lies within a range of the relative blade height (h/H) of

$$0.95 < (h/H)_{\text{point E}} \le 1.0,$$

- in which (h) is the blade height coordinate (h) which originates at the end of the blade which is closer to the starting point (A), and in which (H) is the blade height,
- **in that** the trace of the cutback is defined by the relationship of relative cutback position (s/S$_{AE}$) and the relative cutback length (c/Cm), with
- (c) being the local cutback length in meridional flow direction,
- (C$_m$) being the meridional chord length,
- (s) being the local cutback length in radial direction, and
- (S$_{AE}$) being the radial cutback length,
- in which the local cutback length (c) gradually increases from point (A) and reaches its maximum in the range of 0.60 < s/S$_{AE}$ < 0.95, with the relative cutback length amounting there up to c/Cm = 0.25, and with the relative cutback length (c/Cm) decreasing to at least c/Cm = 0.05.

2. Method in accordance with Claim 1, **characterized in that** the leading edge is given a shape in which the inclination of a tangent (T) to the profile chord in a leading edge exit point (VP) on the cutback profile of the blade is equal to that on the original profile.

**Revendications**

1. Procédé de réparation pour une aube (1) d'une machine à écoulement, dans lequel au moins une partie d'un bord d'attaque (2) de l'aube (1) est retirée, **caractérisé en ce qu'**est pratiquée une échancrure (3) de l'aube (1) entre deux points (A) et (E), dont les positions sur le profil initial du bord d'attaque (2) de l'aube (1) satisfont à la relation suivante:

   - Point (A) est le point initial et se trouve dans une plage de la hauteur d'aube relative (h/H) de:

$$0 \leq (h/H)_{\text{point A}} < 0,85,$$

   - point (E) est le point final et se trouve dans une plage de la hauteur d'aube relative (h/H) de:

$$0,95 < (h/H)_{\text{point E}} \leq 1,0,$$

   - sachant que (h) est la coordonnée (h) de la hauteur d'aube, qui a son origine à l'extrémité de l'aube la plus proche du point initial (A), et (H) est la hauteur de l'aube,
   - **que** l'allure de l'échancrure est définie par le rapport entre la position relative $(s/S_{AE})$ de l'échancrure et la longueur relative $(c/C_m)$ de l'échancrure,
   - **que** (c) est la longueur locale de l'échancrure dans le sens d'écoulement méridien,
   - **que** $(C_m)$ est la longueur de corde méridienne,
   - **que** (s) est la longueur locale de l'échancrure dans le sens radial, et
   - **que** $(S_{AE})$ est la longueur radiale de l'échancrure,
   - **que** la longueur locale (c) de l'échancrure s'accroît lentement à partir du point (A) et atteint son maximum dans la plage de $0,60 < s/S_{AE} < 0,95$, et que la longueur relative de l'échancrure à cet endroit s'élève jusqu'à $c/C_m = 0,25$, et que la longueur relative $(c/C_m)$ de l'échancrure se réduit pour atteindre au moins $c/C_m = 0,05$.

2. Procédé selon la revendication 1, **caractérisé en ce que** le bord d'attaque a une forme dans laquelle l'inclinaison d'une tangente (T) sur la corde du profil à un point de sortie (VP) du bord d'attaque est identique à celle du profil original sur le profil rogné de l'aube.

Fig.1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5281062 A
- DE 19712868 C1